# EUROPEAN PATENT SPECIFICATION

(11) **EP 3 810 501 B1**
(45) Date of publication and mention of the grant of the patent: **01.12.2021**
(21) Application number: 19733897.3
(22) Date of filing: 19.06.2019
(51) Int. Cl.: B63B 35/54, B63B 27/14, G05D 1/00, G01S 13/86, G01S 13/93, G05B 19/4061, G06K 9/00

(54) **SHIP CARGO RAMP POSITIONING SYSTEM**
SYSTEM ZUR POSITIONIERUNG EINES SCHIFFES
SYSTÈME DE POSITIONNEMENT DE RAMPE DE CHARGEMENT DE NAVIRE

(30) Priority: 21.06.2018 SE 1850772
(43) Date of publication of application: 28.04.2021
(73) Proprietor: Macgregor Sweden AB, 400 40 Göteborg (SE)
(72) Inventor: GÖTVALL, David, 433 32 Partille (SE); BEHR, Andreas, 705 94 Örebro (SE); TÖRNBLOM, John, 411 22 Göteborg (SE)
(74) Representative: Bergenstråhle & Partners AB
(86) International application number: PCT/SE2019/050588
(87) International publication number: WO 2019/245440

(56) References cited:
- EP-A1- 0 386 478
- CN-U- 207 360 527
- US-A1- 2013 180 442
- US-A1- 2016 001 701
- US-A1- 2017 330 345

## Description

### Technical field

The present invention relates to methods and arrangements for cargo ramp deployment from a ship and in particular to a solution for efficient and safe deployment of the ramp to a quay.

### Background

Roll-on/roll-off (RoRo) ships are efficient cargo ships for handling transportation of different types of wheeled cargo. For instance transportation of vehicles can be done by simply driving the vehicles onto the cargo ship via a cargo ramp connecting the ship and a landing area such as a quay, pier, wharf or even another vessel. This ramp may be located at different locations on the ship but typically they are located either on the aft or side of the ship. The aft location may be either straight aft or at an angle towards the quay. The latter is often referred to as stern quarter ramp and is arranged at 30-40 degrees angle to the vessel's centre line. In addition, front located ramps are also in use. Using a deployable ramp located at an angle is also very efficient in so far that it can handle many different loading areas, for instance from quays which generally are not fitted up or suited for ramps.

On locations where various types of ships are docked or moored, there can be located objects such as bollards for holding the ship, cargo, or cargo loading equipment on the quay that could potentially be in the way of the ramp when deployed to the quay.

Such cargo ramps can be designed in different variations but in general they have one end hinged to the ship and the other end resting on the quay when deployed. The ship end may also be hoistable to encompass the level of cargo deck or decks on the ship and adjustable at an angle depending on the quay height in relation to the water level.

A movable access ramp is for instance shown in US384686. This document shows a foldable ramp for loading and unloading of roll-on/roll-off type cargo ship.

US2013/180442A1 discloses a system for handling cargo on board and to/from a vessel, wherein said system includes a cargo vessel with a plurality of cargo decks, a number of side doors, a cargo elevator located inside each side door communicating with said cargo decks, and a crane located inside each side door.

US2016001701A1 discloses a method for determining a volume surrounding a machine based on the machine and an independently movable implement attached to the machine.

EP0386478A1 discloses a device for loading spaces with objects of varying sizes, having a computer-aided control unit with which automatic placing of the objects is implemented in dependence on the particular size of the said objects. US2017330345A1 discloses a control system and method of landing an end portion of a freely projecting elongated element, and use of an image processor for generating of control parameters for the control system.

CN207360527U discloses a boarding ladder equipped with a camera and a distance sensor

The ramps are usually very heavy and even though easy to operate they can cause considerable damage if hitting objects on the quay. Cargo items, people or other objects located on the quay may represent considerable value both money and personnel wise and thus utmost care should be taken to reduce risks for damage.

Furthermore, repositioning the ship if the ramp is deployed in wrong place can be very time consuming and costly.

### Summary

It is an object to obviate at least some of the above disadvantages and provide an improved system and method for deployment of cargo ship ramp.

This is provided in a number of embodiments, in which a first is a ramp positioning system according to claim 1.

In the system the model may comprise at least two positions of the ramp. Furthermore, the model may comprise an outline of the ramp, or a combination of positions and outline.

The sensor may be at least one camera, wherein the at least one camera is arranged aligned with a centre line of the ramp, arranged at a side of the ramp, or a combination of centre and side of the ramp, wherein the at least one camera is provided with a clear view of the potential landing area. Furthermore, the camera may be a stereoscopic camera.

The processor may further be arranged to send, using a communication interface, control parameters for controlling the deployment of the ramp or controlling the ships movement when docking.

The ramp positioning system may further comprise a display device, wherein the representation of the potential landing area is shown on the display device together with an overlay of the model of the ramp.

A second embodiment is provided in a method according to claim 7.

The ramp positioning system may further comprise a display device and the method may further comprise the step of displaying an image of the representation on the display device together with an overlay of the model.

The sensor data may comprise at least one image from at least one camera and the method further comprising the step of performing image or data processing on the at least one image or representation in order to identify objects in the image/representation. The objects to be identified are for instance quay and/or any obstacle located on the quay such as a bollard, a person, or a vehicle.

In the method further comprising a step of comparing a position of a detected object with a position of the model, wherein if a detected object is located within a predetermined distance of the landing area sending an indication of a conflict, wherein if a conflict indication is present, locking the ramp so it cannot be lowered to its deployed position.

The method further comprising when the ramp has been lowered into its deployed position determining at least one predetermined reference position of a ramp from sensor data, positioning the model in the representation such that the position of the at least one reference position of the model corresponds to the at least one predetermined reference position of the ramp.

Further, in the method, wherein the ramp positioning system is connected to a ship control system, further may comprise controlling the ship to a mooring position at least dependent on the projected position of the ship ramp, the quay and any obstacles recognised upon the quay.

Yet further the method, when the ramp is in its deployed position, may comprise detecting cargo items being moved across the ramp and counting the cargo item. The method may further comprise calculating a load space availability dependent on the cargo items being moved across the ramp.

Yet another embodiment is provided, a ship comprising a cargo ramp for deployment onto a quay and a ramp positioning system comprising at least one sensor adapted to be mounted so as to have a view of a potential landing area of the ramp and to provide a representation of the potential landing area of the ramp on a quay and objects in the potential landing area and surroundings when the ramp is deployed. The system further comprises a processing circuitry comprising at least one processor, at least one memory arranged to store instructions sets executable by the processor, and at least one sensor interface, wherein the at least one processor is arranged to execute the instruction sets to acquire sensor data via the sensor interface from the at least one sensor, build a representation of the potential landing area using the sensor data, and provide a model of the ramp for predicting the position of the ramp when deployed by comparing the position of the model of the ramp with the representation of the landing area.

The embodiments above have the effect of providing a controlled deployment of the ramp of the ship onto the quay which has the advantage of reducing the risk of hitting objects on the quay.

Furthermore, being able to monitor the deployment of the ramp in this way there is the effect of efficiently controlling the location of the ship in relation to the quay which has the advantages of providing a safer and more efficient positioning of the ship onto a quay and also a more precise deployment of the cargo ramp onto the quay leading to a cost efficient and time saving solution.

### Brief description of the drawings

In the following the invention will be described in a non-limiting way and in more detail with reference to exemplary embodiments illustrated in the enclosed drawings, in which:
- Fig. 1: is a schematic top view illustrating a ship at quay;
- Fig. 2: is a schematic block diagram illustrating an exemplary ramp positioning system;
- Fig. 3: is a schematic top view detail of a ramp deployed at a quay;
- Figs 4a, b: are schematic diagrams illustrating an exemplary ramp representation/model without ramp deployment and with ramp deployment respectively;
- Fig. 5: is a schematic block diagram illustrating an exemplary method;
- Fig. 6: is a schematic block diagram illustrating an exemplary method; and
- Fig. 7: is a schematic block diagram illustrating an exemplary method.

### Detailed description

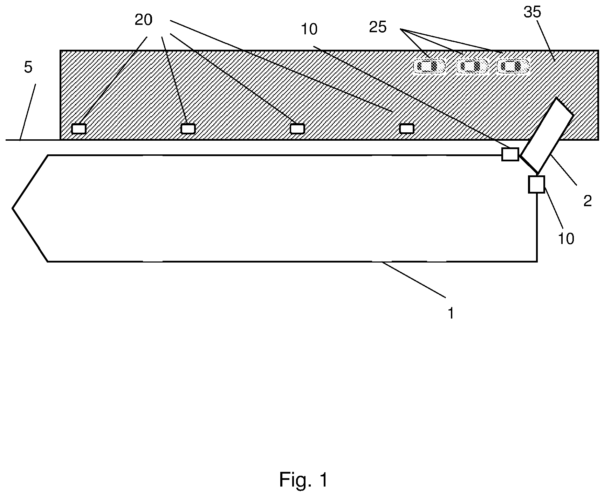

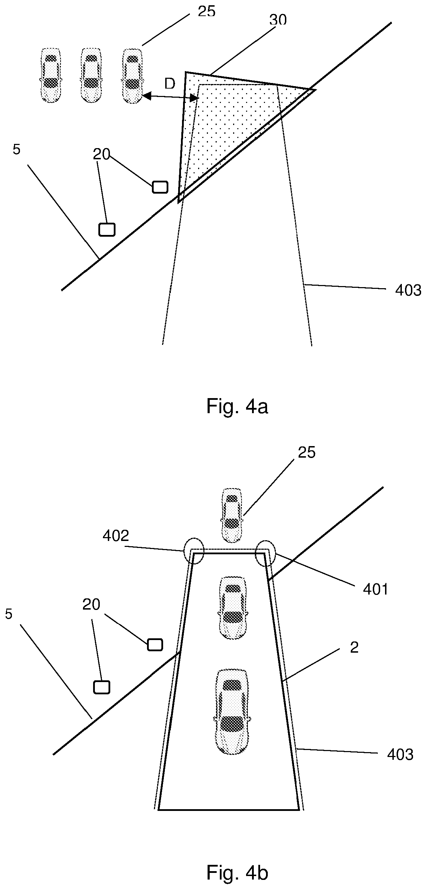

In Fig. 1 reference numeral 1 generally denotes a cargo ship with a cargo ramp 2 deployable to a quay 5. The ship may be for instance a RoRo (roll-on/roll-off) or Sto-Ro (Stowable RoRo) ship. The ship comprise a ramp positioning system 100 with at least one sensor 10 for monitoring the deployment of the ramp 2 in order to perform a controlled landing of the ramp to the quay without hitting any objects 20, 25 on the quay. Examples of such objects may for instance be bollards 20, cargo 25, transportation equipment (not shown), or individuals (not shown). When a ship arrives at a port and is docking to the quay it is important that no objects are located where the ramp will be deployed. The ramp 2 is deployed onto a landing area under the ramp 2 on the quay 5. When docking the ship to the quay there is a potential landing area 35 which in principle is the entire quay 5 depending on where the ship 1 is positioned, dimensions of the ship 1, ramp 2 position on the ship, fixed objects on the quay and so on. During docking of the ship and deployment of the ramp, the potential landing area 35 is at least the area seen by the sensor(s). During docking of the ship and deployment of the ramp, the system analyse the potential landing area 35 and a safety zone 30 around the (actual) landing area The safety zone is set for determining that no objects are located within the safety zone. The concept of safety zone will be discussed in more detail in relation to Fig. 4a.

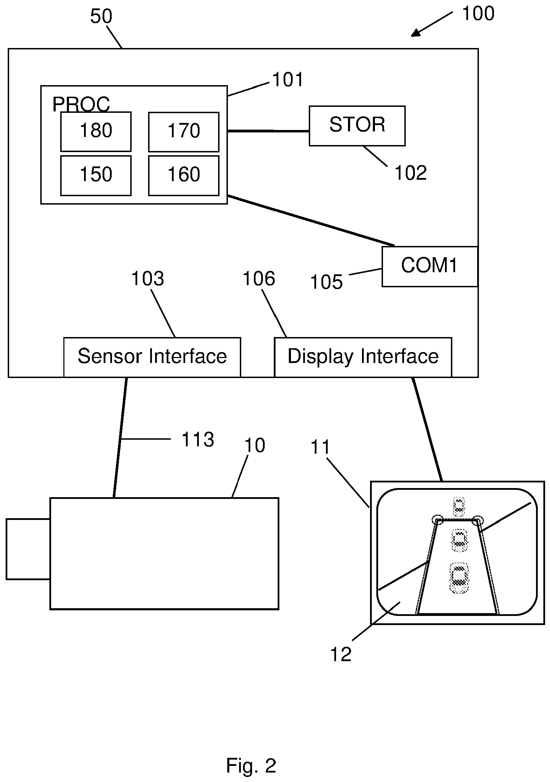

To support the docking of the ship and/or deployment of the ramp, the ramp positioning system 100 as seen in Fig. 2 is used for monitoring the deployment of the ramp and ensuring no objects are within a certain safety limit range of the ramp when deployed, i.e. a safety zone 30. The system 100 comprise a processing circuitry 50 with at least one processor 101, at least one storage unit 102 for storing instruction sets used in the processer and for storing data, at least one sensor interface 103 connected 113 to a sensor 10, and optionally a communication interface 105 connecting to a communication link 113 and further optionally comprise a display interface 106 for providing images for representation of the quay and predicted ramp position to a display device 11. Optionally, the system in itself may also comprise a display device 11 showing an image 12. The processor may comprise a capturing unit 150 for capturing sensor data, a building unit 160 for building a representation of the potential landing area 35, a modelling unit 170 for modelling the ramp, and a comparison unit 180 for comparing the model with the representation of the potential landing area 35. The processor 101 is arranged to execute instruction sets stored in the memory 102 for executing operation steps for facilitating the docking of the ship 1 and/or deployment of the ramp 2 as will be discussed below.

The processor may for instance be a microprocessor, digital signal processor, graphical processing unit (GPU), embedded processor, field programmable gate array (FPGA), or ASIC (Application specific integrated circuit). The storage unit 102 may be volatile or non-volatile computer readable memory and arranged to store instructions for execution by the processor. Instruction sets are preferably stored in a non-volatile memory such as solid state (SSD) or disk drive hard disk, flash memory, or memory card. The storage unit may also comprise a combination of storage types.

The sensor interface may be any suitable interface depending on sensor used, but may include for instance image acquisition interface, serial or parallel interfaces such as RS232, RS485, General purpose interface bus, I2C, Serial peripheral interface (SPI), or similar interfaces. The communication interface may for instance be an Ethernet connection or a wireless link using long or short range communication technology. The wireless link can for instance be according to the WiFi standard but other standards may be used, such as LoRa, Zigbee, or Bluetooth or longer range standards such as cellular radio technologies including GSM, GPRS, EDGE, LTE, 5G or similar. The wireless link may also be of proprietary radio protocol. It should be noted that the sensors may also connect to the processing circuitry 50 using the communication interface, for instance the camera(s) or other sensors located at the ramp vicinity may connect to the processing circuitry using a WiFi connection using an Internet Protocol communication channel. However, other communication protocol standards may be used, e.g. Asynchronous transfer mode (ATM), LocalTalk, or optical fibre.

The system 100 is arranged to execute the instruction sets in the processor 101 for receiving sensor data on the sensor interface 103 and building a representation of the quay with objects and also of the ramp as it is being deployed. The representation may be determined by image processing or data analysis of other sensor data. Furthermore, the system is arranged to determine a model of the ramp 2 when deployed at some suitable load bearing position and compare the model of the deployed ramp with the representation of the quay 5 and objects/obstacles 20, 25 to determine that no objects are located where the ramp will be deployed. The model of the ramp simulates the size and position of the ramp 2 in the field of view of the representation for various deployment positions of the ramp, e.g. when deployed onto the quay 5 for transportation of cargo. The model may be determined during installation of the ramp positioning system 100 knowing the ramp dimensions and location in relation to the sensor(s) or at intervals by sensor analysis when the ramp is deployed, i.e. a self-learning solution. The ramp 2 dimensions and location with respect to the ship 1 may for instance be manually entered into a database connected to the ramp positioning system 100. The recalibration of the model at intervals may be useful if the sensors have been moved (intentionally or un-intentionally) and thus the relative position(s) changed with respect to the location of the ramp 2.

During deployment the system 100 may be arranged to continuously monitor the potential landing area 35 and/or safety zone 30 and the ramp 2 before and during deployment of the ramp to ensure no objects 20, 25 are located or moved into the set safety zone 30. The safety zone 30 may be pre-set or set by the operator depending on specific potential landing area/ship situation. Safety zone 30 may be for instance ramp dimensions plus 0.5 meters, 1 meter, 2 meters, or larger depending on desired safety distance and accuracy in model calibration. The safety zone 30 is applicable also during initial comparison and determination if the potential landing area is suitable and docking of the ship to the quay into a mooring position.

One or several sensors 10 are used for acquiring data in order for the system to build up a representation of the potential landing area 35 that the ramp potentially will occupy when deployed. The sensors may be of one type or a combination of types and may for instance be one or more cameras for acquiring one or several digital images of the environment and landing area, ultrasonic sensors for proximity detection, radar for distance detection and shape detection, LIDAR (Light Detection and Ranging) to determine distance to specific objects in the field of view or to create a 3 dimensional (3D) image of the environment. However, in one embodiment one or several cameras are used for acquiring images of the environment and these images are used for analysing the potential landing area and objects in the field of view. The camera may be a stereoscopic camera or several cameras may be used for building up a 3D representation of the landing area and related surroundings. With a stereoscopic camera it is possible to better determine height/depth measurements dependent on azimuth difference between the two cameras of the stereoscopic camera. It is also possible then to change the view of the representation when knowing the distance to different objects and quay, for instance generating a top view or side view of the ramp 2, ship 1, and quay 5.

The system may be arranged to determine a 3 dimensional (3D) or 2 dimensional (2D) representation of the potential landing area 35 and ramp model such as to provide a top or side view of the ship and potential landing area 35 using the data from the sensor(s).

The system may also by using different types of sensor data and analysis determine other parameters related to the ship 1 location by the quay 5 such as quay height and distance between the ship and quay and/or objects on the quay.

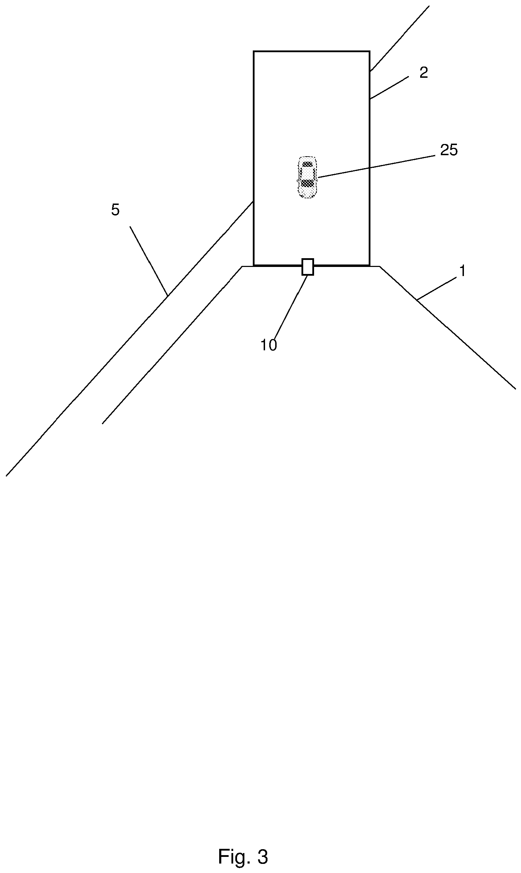

In Fig. 3 a top view of part of the ship 1 with ramp 2 and part of the quay 5 is shown with the ramp deployed to the quay and with a cargo item 25 transported on the ramp. In this exemplary embodiment the sensor 10 is located in a central position as regards the ramp and the system may provide a representation as shown in Fig. 4 showing the ramp 2, cargo items 25 being transported, and the quay 5. The sensor when installed at a central position should be able to view the landing area and surrounding quay area without obstruction by the ramp, for instance either by being installed above the ramp top position when closed or the ramp having an opening or notch (not shown) to provide a clear view for the sensor.

The sensors may be located in any suitable location on the ship 1 with respect to the ramp 2 as long as providing an overview over the potential landing area. In the embodiment of several sensors, such as cameras they may be placed side-by-side each other on one side of the ramp, one on each side of the ramp, or one at a side of the ramp together with a sensor at a central position. Preferably, the sensor(s) also provide an overview of the ramp when deployed to further increase safety monitoring of the ramp.

Camera or other sensors may be positioned to have at least one reference position of the ship in its field of view. The model can then be positioned in relation to the reference position(s) for calibrating the model to the ramp. By using reference points on the ship the processing system can adjust for any changes of the position of the camera or sensors 10. Such changes may occur if someone or something accidentally hits the camera.

Figs 4a and b depicts sensor representations of two situations where the ramp is closed (Fig. 4a) and one where it is deployed (Fig. 4b). In Fig. 4a the ramp is not yet deployed but the system has made a representation of the quay 5, cargo items 25 and other objects 20, and overlaid a model 403 of the ramp to indicate where the ramp 2 would be deployed. In Fig. 4a the safety zone 30 is also indicated. This safety zone may be set manually by an operator or automatically by the system 100 knowing the dimensions of the ramp 2 and with error margins either pre-set or manually entered. The safety zone is set to cover the actual landing area and some distance outside the actual landing area so as to provide a margin around the actual landing area. Furthermore, as indicated in Fig. 4a a distance D between the model of the deployed ramp or safety zone border and objects on the quay may be determined.

In Fig. 4b, the ramp 2 is deployed on the quay 5 and cargo items 25 may be loaded on to the ship 1. In Fig. 4b the model 403 of the ramp is shown as an outline around the ramp 2. Furthermore, reference points 401, 402 are indicated and may be used for calibration of ramp position with respect to ship or for determining ramp outline.

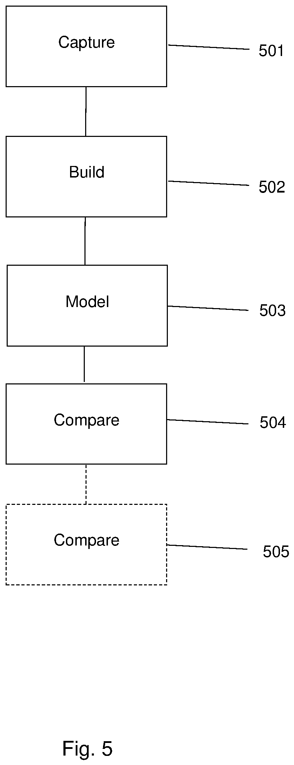

During operation of the ramp positioning system 100, the processing circuitry 50 is executing instructions for a ramp deployment method, as depicted in Fig. 5, comprising steps of capturing 501 sensor data, building 502 a representation of the potential landing area (and potentially the ramp), providing 503 a model 403 of the ramp, and comparing 504 the model of the ramp 2 and the representation of the potential landing area to see that no objects are located in the safety zone or within a set distance to the safety zone and that the ramp 2 will actually land on the landing area in such a way so as to be able to handle the loads when loading or unloading of cargo items; for instance the ramp is preferably deployed with a large enough portion of the ramp on the landing area of the quay 5 and that the angle of deployment is within a range that is allowable from load bearing purposes. In Figs 4a and b the dotted line 403 depict the model of the ramp, i.e. the outline or outer periphery of the ramp. The model of the ramp 2 is preferably set to be slightly larger than the ramp 2 in order to provide a safety margin on sensor data analysis. The system may optionally display 505 the comparison of the representation of the landing area and an overlay of the model of the ramp on a display device 11 viewable by an operator of the deployment of the ramp and/or operator controlling the movement of the ship 1 during mooring at the quay 5. The display device 11 may for instance be located on the bridge or a control room where the ramp 2 is controlled. The display device 11 may for instance be a computer screen 11 showing an image 12 of the representation overlaid with the model, or the display device 11 may alternatively be augmented or mixed reality (AR, MR) glasses used by an operator. The model presented in the display device 11 may be overlaid in such a way as to provide a realistic representation of the ramp in the image, for instance with realistic size and perspective. The system 100 may also be arranged to perform data analysis, such as image processing, to identify objects within the field of view/detection of the sensors.

The system may be arranged to determine or estimating an upper and a lower load bearing position of the ramp 2, i.e. depending on the ramp design the ramp 2 need to be deployed at a certain height to be able to take a load on the ramp; not too high or too low; the angle of deployment is within a range of operation of the ramp. For instance, there is an upper position of the quay end of the ramp where the mechanical design allows for load and likewise a lower position of the quay end of the ramp for load without risk of mechanical failure of the ramp. The overlay may show at least two positions of the ship ramp, a first position in which the ship ramp is in an upper load bearing position and a second position in which the ship ramp 2 is in a lower load bearing position. The system may be arranged to show these positions in the representation, for instance from a side view using for instance image processing and knowing dimensions of the ramp, quay, distance between ship and quay and so on: thus facilitating the deployment of the ramp so the operator may early see if it is possible to deploy the ramp or not.

A training method may also be provided to allow the system to learn the boundaries of the ramp 2 during for instance installation of the ramp positioning system 100 or at different intervals for ensuring the model 403 will be accurate in relation to the real ramp 2. This can be done for instance by the ramp positioning system 100 detecting one or several reference points 401, 402 on the ramp 2 or detecting the outer periphery/outline 403 of the ramp. The system may also be arranged to model the ramp 2 at different positions between closed position and fully deployed. During installation it is also possible to enter dimensions manually into the system. A combination of entering the dimensions manually and training the system may be utilized. A training/calibration method may comprise detecting the ramp 2 in the image representation; determining a plurality of reference positions of the ramp 401, 402; positioning a model 403 of the ramp such that the model aligns with the determined positions of the ramp 401, 402.

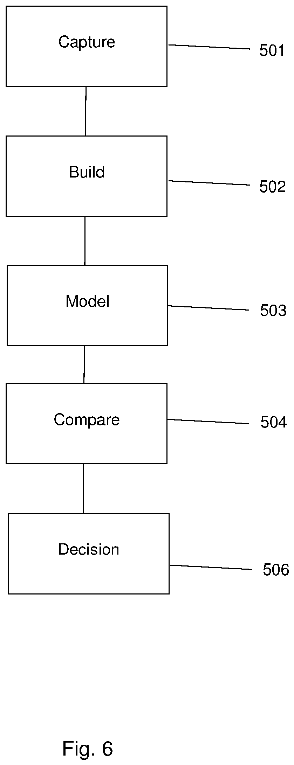

During deployment, after the system 100 has compared the model with the representation of the ramp 2, the system can take a decision 506 that operation is to be halted if an object 20, 25 is detected within the safety zone 30 of the landing area as seen in Fig. 6. For instance, if a person or cargo transportation equipment is moved into the safety zone 30. This is a feature increasing the safety of cargo, equipment, and personnel operating on the quay. Alternatively, the system 100 may be arranged to send a signal indicating a conflict (an electrical signal or an audio signal), send a message, or display a message on a display device if there is a risk that objects 20, 25 are located in the safety zone 30 or within a pre-set distance to the safety zone. Furthermore, the signal may be used to physically stop further deployment until an operator overrides the signal or it is determined that no object no longer is in the landing area.

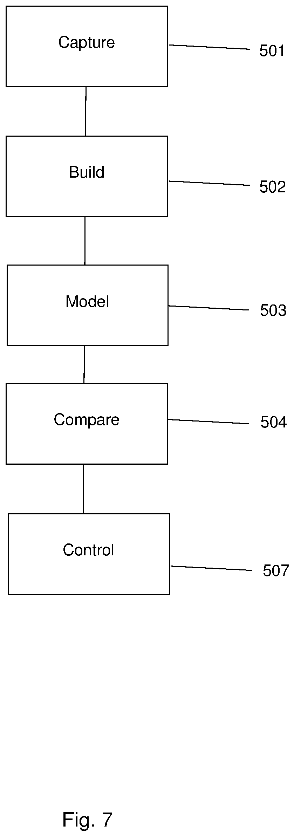

The system 100 may also be used for controlling the deployment of the ramp 2 and/or including the positioning of the ship 1 with respect to the quay 5. This is depicted in Fig. 7 where the system captures 501 sensor data for locating the quay 5 and objects 20, 25 on the quay, builds 502 a representation of the landing area and surrounding areas of the quay, provides a digital model 503 of the ramp, compares 504 the model of the ramp with the landing/quay area representation, and determines and sends 507 control parameters for controlling the deployment of the ramp 2 and/or the movement of the ship 1 towards the quay 5 during docking to a mooring position.

The system may be arranged to count cargo items 25 as they are loaded onto or unloaded by using the sensor data. This may be done for instance by image processing of camera images continuously acquired during loading or unloading of cargo. However, depending on sensors used other types of analysis may be used for identifying cargo items 25 being moved across the ramp 2. Image processing on images taken by the camera or other processing methods utilized on the representation may be used to determine and/or identifying objects 20, 25 on the quay.

If the cargo items 25 have suitable identification information, the system 100 may be used for detecting the cargo identification (ID) and connect to a database for suitable database handling of shipping information, for example to log loading of items on to the ship and updating a shipping database with such information. Furthermore, when knowing cargo ID or knowing cargo types with weight and physical dimensions, the system may be arranged to control load balancing and/or determination of suitable location on cargo deck for efficient unloading of cargo at different ports, i.e. storing cargo in suitable locations on cargo deck in order of unloading. Alternatively, the system 100 may provide suitable cargo information to another system that handles loading of cargo 25.

In some instances the ship 1 is moored at some point in time and it is determined that the landing area/safety zone 30 is clear for deploying the ramp but then later in time before the ramp 2 is deployed some object 20, 25 has been placed in the landing area/safety zone. It would be advantageous to continuously monitor the potential landing area and send a warning message to an operator if any object 20, 25 is located in the safety zone or within a pre-set distance to the safety zone so that it can be removed before deploying the ramp 2. For instance a ship 1 might be moored during the evening and then the ramp deployed at the morning after. During the intermediate time objects might be placed in the safety zone 30 and the system continuously monitoring the potential landing area could send a message, such as a text message via SMS, email or other digital messaging systems, or using some other analogue or digital information solution (such as controlling a lamp on a control panel) to inform suitable responsible person or system that a possible conflict is present, so as to have time to clear away the object before deploying the ramp.

The above described solution may be shown in a number of embodiments, in which a first is a ramp positioning system 100 for a ship 1 with at least one ramp 2 for transporting cargo wherein the ramp is arranged to be set in a closed position and a deployed position. The ramp positioning system comprises at least one sensor 10 adapted to be mounted so as to have a view of a potential landing area 35 of the ramp and to provide data for building a representation of the potential landing area of the ramp on a quay 5 and objects 20, 25 in the potential landing area and surroundings when the ramp is deployed The system further comprises a processing circuitry 50 comprising at least one processor 101, at least one memory 102 arranged to store instructions sets executable by the processor, and at least one sensor interface 103, wherein the at least one processor is arranged to acquire sensor data via the sensor interface from the at least one sensor, build a representation of the potential landing area using the sensor data, and provide a model of the ramp for predicting the position of the ramp when deployed by comparing the position of the model of the ramp with the representation of the potential landing area.

In the system the model may comprise at least two positions of the ramp. Furthermore, the model may comprise an outline of the ramp, or a combination of individual positions and outline.

The sensor may be at least one camera, wherein the at least one camera is arranged aligned with a centre line of the ramp, arranged at a side of the ramp 2, or a combination of centre and side of the ramp, wherein the at least one camera is provided with a clear view of the potential landing area. Furthermore, the camera may be a stereoscopic camera.

The processor may further be arranged to send, using a communication interface, control parameters for controlling the deployment of the ramp or controlling the ships movement when docking.

The ramp positioning system may further comprise a display device, wherein the representation of the potential landing area is shown on the display device together with an overlay of the model of the ramp.

A second embodiment is provided in a method in a ramp positioning system for a ship 1 with at least one ramp 2 wherein the ramp is arranged to be set in a closed position and a deployed position on a landing area of a quay. The method may comprise capturing sensor data, building a representation of a potential landing area using the sensor data, providing a model of the ramp for predicting the position of the ramp on the potential landing area when deployed; and comparing the position of the model of the ramp with the representation of the potential landing area.

The ramp positioning system may further comprise a display device and the method may further comprise the step of displaying an image of the representation on the display device together with an overlay of the model.

The sensor data may comprise at least one image from at least one camera 10 and the method further comprising the step of performing image processing on the at least one image in order to recognise objects in the image. The objects 5, 20, 25 to be recognised are for instance quay 5 and/or any obstacle 20, 25 located on the quay such as a bollard, a person, or a vehicle.

In the method further comprising a step of comparing a position of a detected object with a position of the model, wherein if a detected object is located within a predetermined distance D of the landing area sending an indication of a conflict, wherein if a conflict indication is present, locking the ramp so it cannot be lowered to its deployed position.

In the method, yet further comprising estimating at least one of an upper and a lower load bearing position of the ramp.

The method further comprising when the ramp has been lowered into its deployed position determining at least one predetermined reference position of a ramp 2 from sensor data, positioning the model in the representation such that the position of the at least one reference position of the model corresponds to the at least one predetermined reference position of the ramp.

Further, in the method, wherein the ramp positioning system (100) is connected to a ship control system, may comprise controlling the ship to a mooring position at least dependent on the projected position of the ship ramp, the quay and any obstacles recognised upon the quay.

Yet further the method, when the ramp is in its deployed position, may comprise detecting cargo items being moved across the ramp and counting the cargo item. The method may further comprise calculating a load space availability dependent on the cargo items being moved across the ramp.

In the method further comprising a step of setting a safety zone 30 around a landing area of the ramp 2.

Yet another embodiment is provided, a ship comprising a cargo ramp for deployment onto a quay and a ramp positioning system comprising at least one sensor adapted to be mounted so as to have a view of a potential landing area of the ramp and to provide a representation of the potential landing area of the ramp on a quay and objects in the landing area and surroundings when the ramp is deployed. The system further comprises a processing circuitry comprising at least one processor, at least one memory arranged to store instructions sets executable by the processor, and at least one sensor interface, wherein the at least one processor is arranged to acquire sensor data via the sensor interface from the at least one sensor, build a representation of the landing area using the sensor data, and provide a model of the ramp for predicting the position of the ramp when deployed by comparing the position of the model of the ramp with the representation of the landing area.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

The above mentioned and described embodiments are only given as examples and should not be limiting to the present invention. Other solutions, uses, objectives, and functions within the scope of the invention as claimed in the below described patent embodiments should be apparent for the person skilled in the art.

### Abbreviations

- GSM: Global System for Mobile
- GPRS: General Packet Radio Service
- EDGE: Enhanced Data rates for Global Evolution
- LTE: Long term evolution
- IP: Internet Protocol

## Claims

1. A ramp positioning system (100) for a ship (1) with at least one ramp (2) for transporting cargo onto the ship wherein the ramp (2) is arranged to be set in a closed position and a deployed position, wherein the ramp positioning system (100) comprises:
- at least one sensor (10) adapted to be mounted so as to have a view of a safety zone (30) of an actual landing area of the ramp (2) and at least one reference position on the ship (1) and that the sensor is adapted to provide data for building a representation of the safety zone (30), wherein the size of the safety zone (30) is set to be the ramp dimensions plus a distance D;
- a processing circuitry (50) comprising at least one processor (101), at least one memory (102) arranged to store instructions sets executable by the processor, and at least one sensor interface (103), wherein the at least one processor (101) is arranged to execute the instructions sets to:
• acquire sensor data via the sensor interface from the at least one sensor (10);
• build a representation of the safety zone (30) using the sensor data; and
• provide a model (403) of the ramp (2) for predicting the position of the ramp when deployed by comparing the position of the model of the ramp with the representation of the safety zone (30).

2. The system according to claim 1, wherein the distance D is dependent on desired safety distance and accuracy in model calibration.

3. The system according to any one of claims 1 or 2, wherein the model comprises at least two positions (401, 402) of the ramp, an outline (403) of the ramp, or a combination of positions and outline.

4. The system according to any one of previous claims, wherein the at least one sensor comprises at least one camera (10).

5. The system according to claim 4, wherein the at least one camera (10) is arranged aligned with a centre line of the ramp (2), arranged at a side of the ramp, or a combination of centre and side of the ramp, wherein the at least one camera is provided with a clear view of the safety zone (30).

6. The system according to any one of the preceding claims, wherein the ramp positioning system (100) further comprises a display device (11), wherein the representation of the safety zone (30) is shown on the display device (11) together with an overlay of the model (403) of the ramp (2).

7. A method in a ramp positioning system (100) for a ship (1) with at least one ramp (2) for transportation of cargo wherein the ramp (2) is arranged to be set in a closed position and a deployed position, and at least one sensor (10) mounted to have a view of a safety zone (30) of an actual landing area of the ramp (2) and at least one reference position on the ship (1) and that the sensor is adapted to provide data for building a representation of the safety zone (30) the method comprising:
- capturing (501) sensor (10) data;
- building (502) a representation of a safety zone (30) using the sensor data;
- providing (503) a model (403) of the ramp (2) for predicting a position of the ramp (2) in the safety zone (30) when deployed; and
- comparing (504) the position of the model (403) with the representation of the safety zone (30).

8. The method according to claim 7, wherein the ramp positioning system (100) further comprises a display device (11) and the method further comprises the step of:
- displaying (505) an image (12) of the representation of the safety zone (30) on the display device (11) together with an overlay of the model (403).

9. The method according to claim 8, wherein the sensor data comprise at least one image from at least one camera (10).

10. The method according to any one of the claims 7-9, further comprising the step of performing data processing on the representation in order to identify objects (5, 20, 25) in the representation.

11. The method according to any of the claims 7-10, comparing a position of a detected object with a position of the model (403), wherein if a detected object (25) is located within a predetermined distance (D) of the safety zone (30) sending an indication of a conflict.

12. The method according to any of the claims 7-11, further comprising estimating at least one of an upper and a lower load bearing position of the ramp.

13. The method according to any of the claims 7-12, when the ramp has been lowered into its deployed position, comprising:
- determining at least one predetermined reference position (401, 402) of the ramp (2) from sensor data;
- positioning the model (403) in the representation such that the position of the at least one reference position (401, 402) of the model (403) corresponds to the at least one predetermined reference position of the ramp (2).

14. The method according to any of the claims 7-13, wherein the ramp positioning system (100) is connected to a ship control system, wherein the method further comprises controlling the ship to a mooring position at least dependent on the projected position of the ship ramp (2), the quay (5) and any obstacles (20, 25) recognised upon the quay.

15. A ship (1) comprising a ramp (2), for transporting cargo, for deployment onto a quay (5) and a ramp positioning system (100) according to any of claims 1-6.

## Patentansprüche

1. Rampenpositionierungssystem (100) für ein Schiff (1) mit mindestens einer Rampe (2) zum Befördern von Lasten auf das Schiff, wobei die Rampe (2) angeordnet ist, um in einer geschlossenen Position und einer ausgefahrenen Position eingestellt zu sein, wobei das Rampenpositionierungssystem (100) Folgendes umfasst:
- mindestens einen Fühler (10), der angepasst ist, um so montiert zu sein, dass er eine Sicht auf eine Sicherheitszone (30) einer gegenwärtigen Auflegefläche der Rampe (2) und mindestens eine Referenzposition des Schiff (1) aufweist, und so, dass der Fühler angepasst ist, um Daten zum Erstellen einer Darstellung der Sicherheitszone (30) bereitzustellen, wobei die Größe der Sicherheitszone (30) als die Rampenabmessungen plus ein Abstand D eingestellt ist;
- eine Verarbeitungsschaltung (50), die mindestens einen Prozessor (101), mindestens einen Speicher (102), der angeordnet ist, um von dem Prozessor ausführbare Anweisungssätze zu speichern, und mindestens eine Fühlerschnittstelle (103) umfasst, wobei der mindestens eine Prozessor (101) angeordnet ist, um die Anweisungssätze auszuführen, um:
• von dem mindestens einen Fühler (10) über die Fühlerschnittstelle Fühlerdaten zu akquirieren;
• unter Verwendung der Fühlerdaten eine Darstellung der Sicherheitszone (30) zu erstellen; und
• ein Modell (403) der Rampe (2) bereitzustellen, zum Vorhersagen der Position der Rampe, wenn sie ausgefahren ist, durch Vergleichen der Position des Modells der Rampe mit der Darstellung der Sicherheitszone (30).

2. System nach Anspruch 1, wobei der Abstand D von einem gewünschten Sicherheitsabstand und Genauigkeit der Modellkalibrierung abhängig ist.

3. System nach einem der Ansprüche 1 oder 2, wobei das Modell mindestens zwei Positionen (401, 402) der Rampe, eine Konturlinie (403) der Rampe oder eine Kombination von Positionen und Konturlinie umfasst.

4. System nach einem der vorstehenden Ansprüche, wobei der mindestens eine Fühler mindestens eine Kamera (10) umfasst.

5. System nach Anspruch 4, wobei die mindestens eine Kamera (10) ausgerichtet an einer Mittellinie der Rampe (2) angeordnet ist, an einer Seite der Rampe oder einer Kombination von Mitte und Seite der Rampe angeordnet ist, wobei die mindestens eine Kamera mit einer Freisicht der Sicherheitszone (30) bereitgestellt ist.

6. System nach einem der vorstehenden Ansprüche, wobei das Rampenpositionierungssystem (100) weiter eine Anzeigevorrichtung (11) umfasst, wobei die Darstellung der Sicherheitszone (30) zusammen mit einer Überlagerung des Modells (403) der Rampe (2) auf der Anzeigevorrichtung (11) gezeigt wird.

7. Verfahren in einem Rampenpositionierungssystem (100) für ein Schiff (1) mit mindestens einer Rampe (2) zur Beförderung von Lasten, wobei die Rampe (2) angeordnet ist, um in eine geschlossene Position und eine ausgefahrene Position eingestellt zu sein, und mindestens einem Fühler (10), der so montiert ist, dass er eine Sicht einer Sicherheitszone (30) einer gegenwärtigen Auflegefläche der Rampe (2) und mindestens eine Referenzposition auf dem Schiff (1) aufweist, und so, dass der Fühler angepasst ist, um Daten zum Erstellen einer Darstellung der Sicherheitszone (30) bereitzustellen, wobei das Verfahren Folgendes umfasst:
- Erfassen (501) von Daten des Fühlers (10);
- Erstellen (502) einer Darstellung einer Sicherheitszone (30) unter Verwendung der Fühlerdaten;
- Bereitstellen (503) eines Modells (403) der Rampe (2) zum Vorhersagen einer Position der Rampe (2) in der Sicherheitszone (30), wenn sie ausgefahren ist; und
- Vergleichen (504) der Position des Modells (403) mit der Darstellung der Sicherheitszone (30).

8. Verfahren nach Anspruch 7, wobei das Rampenpositionierungssystem (100) weiter eine Anzeigevorrichtung (11) umfasst, und das Verfahren weiter folgende Schritte umfasst:
- Anzeigen (505) eines Bilds (12) der Darstellung der Sicherheitszone (30) auf der Anzeigevorrichtung (11) zusammen mit einer Überlagerung des Modells (403).

9. Verfahren nach Anspruch 8, wobei die Fühlerdaten mindestens ein Bild von mindestens einer Kamera (10) umfassen.

10. Verfahren nach einem der Ansprüche 7-9, weiter umfassend den Schritt des Durchführens von Datenverarbeitung auf der Darstellung, um in der Darstellung Objekte (5, 20, 25) zu identifizieren.

11. Verfahren nach einem der Ansprüche 7-10, Vergleichen einer Position eines erkannten Objekts mit einer Position des Modells (403), wobei wenn ein erkanntes Objekt (25) innerhalb eines vorbestimmten Abstands (D) der Sicherheitszone (30) positioniert ist, Senden eines Hinweises auf einen Konflikt erfolgt.

12. Verfahren nach einem der Ansprüche 7-11, weiter umfassend Abschätzen von mindestens einem einer oberen und einer unteren lasttragenden Position der Rampe.

13. Verfahren nach einem der Ansprüche 7-12, wenn die Rampe in ihre ausgefahrene Position abgesenkt wurde, umfassend:
- Bestimmen von mindestens einer vorbestimmten Referenzposition (401, 402) der Rampe (2) aus Fühlerdaten;
- Positionieren des Modells (403) in der Darstellung so, dass die Position der mindestens einen Referenzposition (401,402) des Modells (403) der mindestens einen vorbestimmten Referenzposition der Rampe (2) entspricht.

14. Verfahren nach einem der Ansprüche 7-13, wobei das Rampenpositionierungssystem (100) mit einem Schiffssteuerungssystem verbunden ist, wobei das Verfahren weiter Steuern des Schiff zu einer Anlegeposition umfasst, die mindestens von der projizierten Position der Schiffsrampe (2), dem Kai (5) und auf dem Kai eventuell erkannten Hindernissen (20, 25) abhängig ist.

15. Schiff (1), umfassend eine Rampe (2) zum Befördern von Lasten zum Ausfahren auf einen Kai (5) und ein Rampenpositionierungssystem (100) nach einem der Ansprüche 1-6.

## Revendications

1. Système de positionnement de rampe (100) pour un navire (1) avec au moins une rampe (2) permettant de transporter un chargement sur le navire dans lequel la rampe (2) est agencée pour être mise dans une position fermée et une position déployée, dans lequel le système de positionnement de rampe (100) comprend :
- au moins un capteur (10) adapté pour être monté de façon à avoir une vue d'une zone de sécurité (30) d'une zone d'arrivée réelle de la rampe (2) et d'au moins une position de référence sur le navire (1) et à ce que le capteur soit adapté pour fournir des données permettant de créer une représentation de la zone de sécurité (30), dans lequel la taille de la zone de sécurité (30) est réglée pour être les dimensions de rampe plus une distance D ;
- un ensemble de circuits de traitement (50) comprenant au moins un processeur (101), au moins une mémoire (102) agencée pour stocker des jeux d'instructions exécutables par le processeur, et au moins une interface de capteur (103), dans lequel le au moins un processeur (101) est agencé pour exécuter les jeux d'instructions pour :
• acquérir des données de capteur via l'interface de capteur à partir du au moins un capteur (10) ;
• créer une représentation de la zone de sécurité (30) à l'aide des données de capteur ; et
• fournir un modèle (403) de la rampe (2) permettant de prédire la position de la rampe lorsqu'elle est déployée en comparant la position du modèle de la rampe à la représentation de la zone de sécurité (30).

2. Système selon la revendication 1, dans lequel la distance D dépend d'une distance de sécurité souhaitée et d'une exactitude dans un calage de modèle.

3. Système selon l'une quelconque des revendications 1 ou 2, dans lequel le modèle comprend au moins deux positions (401, 402) de la rampe, un contour (403) de la rampe, ou une combinaison de positions et d'un contour.

4. Système selon l'une quelconque des revendications précédentes, dans lequel le au moins un capteur comprend au moins une caméra (10).

5. Système selon la revendication 4, dans lequel la au moins une caméra (10) est agencée alignée sur une ligne centrale de la rampe (2), agencée au niveau d'un côté de la rampe, ou d'une combinaison d'un centre et d'un côté de la rampe, dans lequel la au moins une caméra est dotée d'une vue claire de la zone de sécurité (30).

6. Système selon l'une quelconque des revendications précédentes, dans lequel le système de positionnement de rampe (100) comprend en outre un dispositif d'affichage (11), dans lequel la représentation de la zone de sécurité (30) est montrée sur le dispositif d'affichage (11) conjointement avec un recouvrement du modèle (403) de la rampe (2).

7. Procédé dans un système de positionnement de rampe (100) pour un navire (1) avec au moins une rampe (2) pour un transport d'un chargement dans lequel la rampe (2) est agencée pour être mise dans une position fermée et une position déployée, et au moins un capteur (10) monté pour avoir une vue d'une zone de sécurité (30) d'une zone d'arrivée réelle de la rampe (2) et d'au moins une position de référence sur le navire (1) et que le capteur est adapté pour fournir des données permettant de créer une représentation de la zone de sécurité (30) le procédé comprenant :
- une capture (501) de données de capteur (10) ;
- une création (502) d'une représentation d'une zone de sécurité (30) à l'aide des données de capteur ;
- une fourniture (503) d'un modèle (403) de la rampe (2) permettant de prédire une position de la rampe (2) dans la zone de sécurité (30) lorsqu'elle est déployée ; et
- une comparaison (504) de la position du modèle (403) à la représentation de la zone de sécurité (30).

8. Procédé selon la revendication 7, dans lequel le système de positionnement de rampe (100) comprend en outre un dispositif d'affichage (11) et le procédé comprend en outre l'étape consistant à :
- afficher (505) une image (12) de la représentation de la zone de sécurité (30) sur le dispositif d'affichage (11) conjointement avec un recouvrement du modèle (403).

9. Procédé selon la revendication 8, dans lequel les données de capteur comprennent au moins une image en provenance d'au moins une caméra (10).

10. Procédé selon l'une quelconque des revendications 7-9, comprenant en outre l'étape consistant à réaliser un traitement de données sur la représentation afin d'identifier des objets (5, 20, 25) dans la représentation.

11. Procédé selon l'une quelconque des revendications 7-10, comparant une position d'un objet détecté à une position du modèle (403), dans lequel si un objet (25) détecté est situé dans une distance (D) prédéterminée de la zone de sécurité (30) envoyant une indication d'un conflit.

12. Procédé selon l'une quelconque des revendications 7-11, comprenant en outre une estimation d'au moins une de positions de support de charge supérieure et inférieure de la rampe.

13. Procédé selon l'une quelconque des revendications 7-12, lorsque la rampe a été abaissée dans sa position déployée, comprenant :
- une détermination d'au moins une position de référence (401, 402) prédéterminée de la rampe (2) à partir de données de capteur ;
- un positionnement du modèle (403) dans la représentation de telle sorte que la position de la au moins une position de référence (401, 402) du modèle (403) corresponde à la au moins une position de référence prédéterminée de la rampe (2).

14. Procédé selon l'une quelconque des revendications 7-13, dans lequel le système de positionnement de rampe (100) est relié à un système de commande de navire, dans lequel le procédé comprend en outre une commande du navire jusqu'à une position de mouillage dépendant au moins de la position projetée de la rampe (2) de navire, du quai (5) et de n'importe quels obstacles (20, 25) reconnus sur le quai.

15. Navire (1) comprenant une rampe (2), permettant de transporter un chargement, pour un déploiement sur un quai (5) et un système de positionnement de rampe (100) selon l'une quelconque des revendications 1-6.
